# EUROPEAN PATENT APPLICATION

(11) **EP 3 950 298 A1**
(43) Date of publication of application: **09.02.2022**
(21) Application number: 20783590.1
(22) Date of filing: 30.01.2020
(51) Int. Cl.: B32B 5/08, B32B 5/28, B29C 70/06

(54) **LAMINATE, THREE-DIMENSIONAL MOLDED LAMINATE, AND METHOD FOR PRODUCING THREE-DIMENSIONAL MOLDED LAMINATE**

(30) Priority: 01.04.2019 JP 2019069921
(71) Applicant: Mitsui Chemicals, Inc., Tokyo 105-7122 (JP)
(72) Inventor: ISAKI, Takeharu, Sodegaura-shi, Chiba 299-0265 (JP); MIZUMOTO, Kazuya, Sodegaura-shi, Chiba 299-0265 (JP)
(74) Representative: Hoffmann Eitle
(86) International application number: PCT/JP2020/003366
(87) International publication number: WO 2020/202754

(57) **Abstract**

Disclosed is a laminate having a carbon fiber reinforced thermoplastic resin woven layer (X) and a thermoplastic resin foam layer (Y) layered in the order of layer (X)/layer (Y)/layer (X), wherein the fabric contains unidirectional fiber reinforced resin sheets as warp and weft, the unidirectional fiber reinforced resin sheet containing continuous carbon fibers and a thermoplastic resin, and the carbon fibers are aligned in a longitudinal direction of the unidirectional fiber reinforced resin sheet, and the ratio (y/x) of the thickness (y) of the layer (Y) and the thickness (x) of the layer (X) is 3-40, and the density of the layer (Y) is 0.2-0.6 g/cc. Also disclosed are: a three-dimensional molded laminate in which a three-dimensional shape is given to said laminate; and a method for producing a three-dimensional molded laminate.

## Description

### Technical Field

The present invention relates to a laminate that is resistant to cracking when a three-dimensional shape is given thereto, a three-dimensional shaped laminate obtained by giving a three-dimensional shape to such a laminate, and a method for producing the three-dimensional shaped laminate.

### Background Art

Conventionally, a composite laminated structure including a resin layer that is reinforced with fibers and provided on the outer surface of a resin foam is known, and this composite laminated structure has characteristics of being lightweight and having high surface rigidity. For example, Patent Literature (hereinafter abbreviated as "PTL") 1 describes a laminate including one or more prepregs (which include continuous reinforcing fibers aligned in one direction and are impregnated with a thermoplastic resin) laminated with a resin foam, and in the laminate, the layers are thermally bonded. PTL 2 describes a composite laminated structure in which a heat insulating layer is provided between a resin foam and a laminate formed by laminating fiber reinforced resin plates.

### Citation List

### Patent Literature

PTL 1
   Japanese Patent Application Laid-Open No. H07-178859
PTL 2
   Japanese Patent Application Laid-Open No. H07-112501

### Summary of Invention

### Technical Problem

When the inventors press-mold the laminate and the composite laminated structure described in PTLs 1 and 2 to give a three-dimensional shape, the laminate and the composite laminated structure are cracked or wrinkled, or the inner layer cannot follow the outer layer at the outer edge portion, thereby exposing the inner layer (that is, the followability is inferior) in some cases.

An object of the present invention is to provide a laminate that is resistant to cracking when a three-dimensional shape is given thereto, a three-dimensional shaped laminate obtained by giving a three-dimensional shape to such a laminate, and a method for producing the three-dimensional shaped laminate.

### Solution to Problem

As a result of intensive study to achieve the above objective, the present inventors have found that the use of a fabric of a specific unidirectional fiber reinforced resin sheet, and a specific thermoplastic resin foam is very effective, and completed the present invention. The present invention includes the following configurations.
[1] A laminate including carbon fiber reinforced thermoplastic resin fabric layers (X) each containing a fabric; and a foam layer (Y) of a thermoplastic resin in a layer structure having an order of layer (X) / layer (Y) / layer (X), wherein the fabric contains unidirectional fiber reinforced resin sheets as warp and weft, the unidirectional fiber reinforced resin sheet containing continuous carbon fibers and a thermoplastic resin, and the carbon fibers are aligned in a longitudinal direction of the unidirectional fiber reinforced resin sheet,
   in which a ratio (y/x) of a thickness (y) of the layer (Y) to a thickness (x) of the layer (X) is 3 to 40, and
   in which a density of the layer (Y) is 0.2 to 0.6 g/cc.
[2] The laminate according to [1], in which an aperture rate of the fabric contained in the carbon fiber reinforced thermoplastic resin fabric layer (X) is 0.01 to 20%.
[3] The laminate according to [1], in which a thickness of the laminate is 1 to 12 mm.
[4] The laminate according to [1], in which a type of a matrix resin (XA) contained in the carbon fiber reinforced thermoplastic resin fabric layer (X) is identical to a type of a resin (YA) contained in the foam layer (Y).
[5] The laminate according to [1], in which a matrix resin (XA) contained in the carbon fiber reinforced thermoplastic resin fabric layer (X) and a resin (YA) contained in the foam layer (Y) are both propylene polymers.
[6] The laminate according to [1], in which a foaming ratio of the foam layer (Y) is 1.3 to 5 times.
[7] The laminate according to [1], in which the laminate is used as an exterior material for an application selected from transportation equipment applications, home appliances equipment applications, and building applications.
[8] The laminate according to [1], in which when a longitudinal direction of the laminate is 0°, an angle of fiber orientation of one of the unidirectional fiber reinforced resin sheets of the fabric contained in the carbon fiber reinforced thermoplastic resin fabric layer (X) is ±30 to ±60°.
[9] A three-dimensional shaped laminate, in which the three-dimensional shaped laminate is obtained by giving a three-dimensional shape to the laminate according to [1].
[10] The three-dimensional shaped laminate according to [9], in which, in a cross-section of a portion containing the three-dimensional shape of the three-dimensional shaped laminate, a maximum value of a ratio (Lw/Ld) of a cross-sectional perimeter (Lw) to a linear length (Ld) between end points of the cross-section is 1.01 to 1.60.
[11] The three-dimensional shaped laminate according to [9], in which a projected area (S) of the three-dimensional shape viewed in a plan view in a thickness direction of the three-dimensional shaped laminate is 100 to 3,000 mm².
[12] The three-dimensional shaped laminate according to [9], in which a depth (N) of the three-dimensional shape in a thickness direction of the three-dimensional shaped laminate is 1 to 100 mm.
[13] The three-dimensional shaped laminate according to [9], in which a minimum value of a bending radius (R) in the three-dimensional shape of the three-dimensional shaped laminate is 0.5 to 10.0 mm.
[14] A method for producing a three-dimensional shaped laminate, in which the laminate according to [1] is subjected to heat pressing to give a three-dimensional shape to the laminate.
[15] The method according to [14], in which the heat pressing is processing by a stamping method.

### Advantageous Effects of Invention

The present invention is capable of providing a laminate that is resistant to cracking when a three-dimensional shape is given thereto, a three-dimensional shaped laminate obtained by giving a three-dimensional shape to such a laminate, and a method for producing the three-dimensional shaped laminate.

In particular, the present invention uses a fabric containing unidirectional fiber reinforced resin sheets as warp and weft, thus a small range of movement is generated between the sheets constituting the fabric, and the presence of this range of movement allows the fabric to follow a three-dimensional shape without cracking. As a result, cracks are less likely to occur as compared with the case where a three-dimensional shape is given to a single unidirectional fiber reinforced resin sheet or a plurality of unidirectional fiber reinforced resin sheets that are laminated and fused.

In addition, as a carbon fiber is used as the continuous fiber in the unidirectional fiber reinforced resin sheets, it is easier to follow the three-dimensional shape than when other reinforcing fibers (such as a glass fiber) are used. As a result, cracks are less likely to occur.

Further, a foam layer (Y) of a thermoplastic resin is provided between the two carbon fiber reinforced thermoplastic resin fabric layers (X), thus a small range of movement is generated between the layers (X), and the presence of this range of movement allows the fabric to follow a three-dimensional shape without cracking. As a result, cracks are less likely to occur as compared with the case where a three-dimensional shape is given to a single unidirectional fiber reinforced resin sheet or a plurality of unidirectional fiber reinforced resin sheets that are laminated and fused.

### Brief Description of Drawings

FIG. 1A is a schematic perspective view for explaining a layer structure of a laminate in an embodiment of the present invention, and FIG. 1B is a partially enlarged schematic plan view of the laminate;
FIG. 2 is a schematic cross-sectional view of the laminate in the embodiment of the present invention;
FIG. 3 shows a schematic cross-sectional view illustrating a three-dimensional shape of the three-dimensional shaped laminate of the present invention and a schematic plan view of the three-dimensional shape; and
FIG. 4A is a schematic perspective view illustrating the shape of a mold used for press molding in Examples and Comparative Examples, FIG. 4B is a schematic cross-sectional view of the mold taken along the line A-A, and FIG. 4C is a schematic cross-sectional view of the mold taken along the line B-B.

### Description of Embodiments

### Carbon Fiber reinforced Thermoplastic Resin Fabric Layer (X)

Unidirectional fiber reinforced resin sheets constituting a fabric layer of a carbon fiber reinforced thermoplastic resin (herein, also referred to as "carbon fiber reinforced thermoplastic resin fabric layer") (X) in the present invention is a carbon fiber reinforced thermoplastic resin composition containing a thermoplastic resin and a carbon fiber.

The carbon fiber reinforced thermoplastic resin composition particularly preferably contains
20 to 80 mass% of a polymer (I) having a melting point and/or a glass transition temperature of 50 to 400°C, and
20 to 80 mass% of a carbon fiber (C)
(with a proviso that the total of the components (I) and (C) is 100 mass%).

The polymer (I) may be any type of thermoplastic resin that has a melting point and/or glass transition temperature of 50 to 400°C. A polyolefin containing an olefin unit having 2 to 20 carbon atoms is preferred.

The carbon fiber reinforced thermoplastic resin composition preferably contains a propylene-based resin (herein, also referred to as "propylene resin") (A) which preferably contains 50 mol% or more of a constituent unit derived from propylene, a propylene resin (B) that has at least a carboxylate bonded to the polymer chain, and a carbon fiber (C).

The propylene resin (A) preferably contains more than 60 mass% and 100 mass% or less of a component (A-1) having a weight average molecular weight Mw of more than 50,000, and 0 mass% or more and less than 40 mass% of a component (A-2) having a weight average molecular weight Mw of 100,000 or less (with a proviso that the total of the components (A-1) and (A-2) is 100 mass%, and the weight average molecular weights Mw of the components satisfy the expression: (A-1) > (A-2)). Further, the weight average molecular weight of the propylene resin (A) is preferably larger than the weight average molecular weight of the propylene resin (B). The preferable content of the propylene resin component (A-1) is 70 mass% or more and 100 mass% or less. The melting point or glass transition temperature of the propylene resin (A) is typically 0 to 165°C. Resins with no melting point may also be used.

The amount of the propylene resin (B) is preferably 3 to 50 parts by mass, more preferably 5 to 45 parts by mass, and particularly preferably 10 to 40 parts by mass with respect to 100 parts by mass of the propylene resin (A). The total content of the propylene resin (A) and the propylene resin (B) is preferably 5 to 60 mass%, more preferably 3 to 55 mass%, and particularly preferably 3 to 50 mass% in the entire carbon fiber bundle.

As the carbon fiber (C) that constitutes the carbon fiber bundle, specifically carbon fibers such as PAN-based, pitch-based, rayon-based carbon fibers are preferable from the viewpoint of improving mechanical properties, and PAN-based carbon fibers are more preferable from the viewpoint of balancing strength and elastic modulus.

As the carbon fiber (C), a carbon fiber having a surface oxygen concentration ratio [O/C] of 0.05 to 0.5, which is the ratio of the numbers of atoms of oxygen (O) and carbon (C) on the fiber surface measured by X-ray photoelectron spectroscopy, is preferred. The surface oxygen concentration ratio [O/C] is more preferably 0.08 to 0.4, and particularly preferably 0.1 to 0.3. A surface oxygen concentration ratio [O/C] of 0.05 or more allows for a sufficient amount of functional groups on the surface of the carbon fiber (C) for obtaining stronger adhesion to the thermoplastic resin. The upper limit of the surface oxygen concentration ratio [O/C] may be any value, but 0.5 or less is generally preferred from the viewpoint of balancing handling of the carbon fiber (C) and the productivity.

The surface oxygen concentration ratio [O/C] of the carbon fiber (C) can be determined by the X-ray photoelectron spectroscopy according to the following procedure. First, the carbon fiber bundle is cut into 20 mm pieces after removing the sizing agent and the like adhering to the carbon fiber surface with a solvent, the pieces are spread and arranged on a copper sample support, A1Ka1 and 2 are used as the X-ray sources, and the inside of the sample chamber is kept at 1×10⁸ Torr. The kinetic energy value (K.E.) of the C₁ₛ main peak is adjusted to 1,202 eV as a correction value of the peak due to charging during measurement. The C₁ₛ peak area is determined by drawing a straight baseline in the range of 1,191 to 1,205 eV as the K.E. The O₁ₛ, peak area is determined by drawing a straight baseline in the range of 947 to 959 eV as the K.E.

The surface oxygen concentration ratio [O/C] is calculated as the atomic number ratio from the ratio of the O₁ₛ peak area to the C₁ₛ peak area as described above, by using the sensitivity correction value specific to the apparatus. Model ES-200 manufactured by Kokusai Electric Co., Ltd. is used as an X-ray photoelectron spectroscopy apparatus, and the sensitivity correction value is set to 1.74.

Any method may be used for controlling the surface oxygen concentration ratio [O/C] to 0.05 to 0.5. For example, methods such as electrolytic oxidation treatment, chemical solution oxidation treatment, and gas phase oxidation treatment can be used. In particular, the electrolytic oxidation treatment is preferred.

The average fiber diameter of the carbon fiber (C) is not limited. However, from the viewpoint of mechanical properties and surface appearance, the average fiber diameter is preferably 1 to 20 µm, more preferably 3 to 15 µm. The number of single threads of the carbon fiber bundle is not limited. The number is typically 100 to 350,000, preferably 1,000 to 250,000, and more preferably 5,000 to 220,000.

In the propylene resin (A), the weight average molecular weight of the component (A-1), which has a weight average molecular weight of more than 50,000, is preferably 70,000 or more, more preferably 100,000 or more. The upper limit of the weight average molecular weight thereof is not particularly specified. However, from the viewpoint of melt fluidity during molding and the appearance of the composition molded product described below, the weight average molecular weight of the component (A-1) is preferably 700,000 or less, more preferably 500,000 or less, particularly preferably 450,000 or less, and most preferably 400,000 or less. When the total of the propylene resin component (A-1) and the polypropylene resin component (A-2) is 100 mass%, the content of the propylene resin component (A-1) is preferably more than 60 mass% and 100 mass% or less, more preferably 70 to 100 mass%, and particularly preferably 73 to 100 mass%.

The polypropylene resin (A) may contain a component (A-2) having a weight average molecular weight of 100,000 or less, as necessary. The weight average molecular weight of the component (A-2) is preferably 50,000 or less, more preferably 40,000 or less. In view of the strength and handling (for example, stickiness) of the carbon fiber bundle, the lower limit of the weight average molecular weight of the component (A-2) is preferably 10,000 or more, more preferably 15,000 or more, particularly preferably 20,000 or more, and most preferably 25,000 or more. When the total of the propylene resin component (A-1) and the polypropylene resin component (A-2) is 100 mass%, the content of the propylene resin component (A-2) is preferably 0 mass% or more and less than 40 mass%, more preferably 0 to 30 mass%, and particularly preferably 0 to 27 mass%.

The difference between the weight average molecular weights of the propylene resin component (A-1) and the propylene resin component (A-2) is preferably 20,000 to 300,000, more preferably 30,000 to 200,000, and particularly preferably 35,000 to 200,000.

The propylene resin (A) is a resin having a structural unit derived from propylene, and is typically a propylene polymer. Preferred examples thereof include copolymers containing a structural unit derived from at least one type of olefin or polyene selected from α-olefins, conjugated dienes, non-conjugated dienes, and the like.

Specific examples of the α-olefins include α-olefins (excluding propylene) having 2 to 20 carbon atoms, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. In particular, 1-butene, ethylene, 4-methyl-1-pentene and 1-hexene are preferred, and 1-butene and 4-methyl-1-pentene are more preferred.

Specific examples of the conjugated dienes and non-conjugated dienes include butadiene, ethylidene norbornene, dicyclopentadiene, and 1,5-hexadiene. These components may be used in combination.

The propylene resin (A) is preferably a random or block copolymer of propylene and the above-described olefin or polyene compound. Other thermoplastic polymers may be used in combination as long as the object of the present invention is not impaired. Suitable examples of the other thermoplastic polymers include ethylene/propylene copolymer, ethylene/1-butene copolymer, and ethylene/propylene/1-butene copolymer.

The propylene resin (A) contains a constituent unit derived from propylene in an amount of typically 50 mol% or more and 100 mol% or less, preferably 50 to 99 mol%, more preferably 55 to 98 mol%, and particularly preferably 60 to 97 mol% from the viewpoint of increasing the affinity with a propylene resin (D) (generally referred to as a matrix resin) described below and the propylene resin (B) described below.

The propylene resin (A) preferably have a Shore A hardness of 60 to 90, or a Shore D hardness of 45 to 65. The Shore A hardness is more preferably 65 to 88, particularly preferably 70 to 85. The Shore D hardness is more preferably 48 to 63, particularly preferably 50 to 60.

The propylene resin (A) may be modified with a compound having a group such as a carboxylic acid group or a carboxylic acid ester group, or may be an unmodified product. When the propylene resin (A) is a modified product, the modified amount (in terms of a group represented by -C(=O)-O-) is preferably less than 2.0 mmol equivalent, more preferably 1.0 mmol equivalent or less, and particularly preferably 0.5 mmol equivalent or less. When the propylene resin (A) is a modified product, it is preferable that mainly the component (A-2) is the modified product.

On the other hand, depending on the intended application, it may be preferable that the propylene resin (A) is substantially an unmodified product. Herein, substantially unmodified means preferably not modified at all, but even if modified, the amount of the modification is within a range that does not impair the object of the present invention. In this case, the modification amount (in terms of a group represented by -C(=O)-O- per gram of the propylene resin (A)) is typically less than 0.05 mmol equivalent, preferably 0.01 mmol equivalent or less, more preferably 0.001 mmol or less, and particularly preferably 0.0001 mmol or less.

The propylene resin (B) is a propylene resin having at least a carboxylate bonded to the polymer chain. The propylene resin (B) is effective in enhancing the interaction with the carbon fiber (C).

Examples of the material for the propylene resin (B) include polypropylene and copolymers of propylene and one or more types of α-olefins, represented by, for example, ethylene/propylene copolymer, propylene/1-butene copolymer, and ethylene/propylene/1-butene copolymer. The examples of the material also include monomers having a neutralized or not neutralized carboxylic acid group and/or monomers having a saponified or not saponified carboxylic acid ester. A typical method for producing the propylene resin (B) is radical graft polymerization of a propylene-based polymer (herein also referred to as "propylene polymer") and a monomer containing a carboxylic acid structure (not only the structure of carboxylic acid itself, but also the structure from carboxylic acid such as carboxylic anhydride, carboxylate, and carboxylic acid ester). As the olefin used for the propylene polymer, various olefins can be selected in the same manner as in the propylene resin (A).

Examples of the monomer having a carboxylic acid group that is neutralized or not neutralized and the monomer having a carboxylic acid ester group that is saponified or not saponified include ethylene-based unsaturated carboxylic acids and anhydrides thereof. The examples also include esters of the above compounds, and compounds having unsaturated vinyl groups other than olefins.

Examples of the ethylene-based unsaturated carboxylic acid include (meth)acrylic acid, maleic acid, fumaric acid, tetrahydrophthalic acid, itaconic acid, citraconic acid, crotonic acid, isocrotonic acid, and the like. Examples of the anhydride thereof include nadic acid (trademark (endosis-bicyclo [2.2.1] hept-5-ene-2,3-dicarboxylic acid)), maleic anhydride, and citraconic anhydride.

Examples of the monomers having unsaturated vinyl groups other than olefins include (meth)acrylic acid esters such as methyl (meth)acrylate, ethyl (meth)acrylate, propyl (meth)acrylate, n-butyl (meth)acrylate, i-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobolonyl (meth)acrylate, dicyclopentanyl (meth)acrylate, dicyclopentenyl (meth)acrylate, dimethylaminoethyl (meth)acrylate, and diethylaminoethyl (meth)acrylate; vinyls having a hydroxyl group, such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; vinyls having an epoxy group, such as glycidyl (meth)acrylate and methyl glycidyl (meth)acrylate; vinyls having an isocyanate group, such as vinyl isocyanate and isopropenyl isocyanate; aromatic vinyls, such as styrene, α-m ethyl styrene, vinyltoluene, and t-butylstyrene; amides such as acrylamide, methacrylamide, N-methylolmethacrylamide, N-methylolacrylamide, diacetoneacrylamide, and maleic acid amide; vinyl esters, such as vinyl acetate and vinyl propionate; aminoalkyl (meth)acrylates, such as N, N-Dimethylaminoethyl (meth)acrylate, N, N-diethylaminoethyl (meth)acrylate, N, N-dimethylaminopropyl (meth)acrylate, N, N-dipropylaminoethyl (meth)acrylate, N, N-dibutylaminoethyl (meth)acrylate, and N, N-dihydroxyethylaminoethyl (meth)acrylate; unsaturated sulfonic acids, such as styrene sulfonic acid, sodium styrene sulfonic acid, 2-acrylamide-2-methylpropane sulfonic acid; and unsaturated phosphoric acids, such as mono(2-methacryloyloxyethyl) acid phosphate and mono(2-acryloyloxyethyl) acid phosphate.

These monomers may be used individually or in combination. In particular, acid anhydrides are preferred, and maleic anhydride is particularly preferred.

The propylene resin (B) can be obtained by radical graft polymerization as described above. Specific examples of the methods for producing the propylene resin (B) include a method in which a propylene polymer and a monomer having a carboxylic acid structure are reacted in an organic solvent in the presence of a polymerization initiator, and then the solvent is removed; a method in which a monomer having a carboxylic acid structure and a polymerization initiator are reacted while stirring in a melt obtained by heating and melting a propylene polymer; and a method in which a mixture of a monomer having a carboxylic acid structure, a propylene polymer, and a polymerization initiator is supplied to an extruder and reacted while being heated and kneaded, and then converted into a carboxylate by a method such as neutralization or saponification.

The content of the carboxylic acid group in the propylene resin (B) can be measured by NMR or IR. The content can also be evaluated by the acid value. The acid value of the propylene resin (B) is preferably 10 to 100 mg-KOH/g, more preferably 20 to 80 mg-KOH/g, particularly preferably 25 to 70 mg-KOH/g, and most preferably 25 to 65 mg-KOH/g.

The method for producing the propylene resin (B) by neutralization or saponification is a practically preferable method because it is easy to treat the material of the propylene resin (B) as an aqueous dispersion.

The degree of neutralization or saponification, which is the conversion rate of the carboxylic acid group of the material for the propylene resin (B) to a salt such as a metal salt or an ammonium salt, is typically 50 to 100%, preferably 70 to 100%, and more preferably 85 to 100% from the viewpoint of the stability of the aqueous dispersion and the adhesion to the fiber. It is desirable that all the carboxylic acid groups in the propylene resin (B) be neutralized or saponified by a basic substance, but some carboxylic acid groups may remain without being neutralized or saponified.

From the viewpoint of enhancing the interaction with the carbon fiber (C), the content of the carboxylate bonded to the polymer chain of the propylene resin (B), that is the modified amount (total amount in terms of a group represented by -C(=O)-O- per gram of the propylene resin (B)), is preferably 0.05 to 5 mmol equivalent, more preferably 0.1 to 4 mmol equivalent, and particularly preferably 0.3 to 3 mmol equivalent.

The weight average molecular weight of the propylene resin (B) is preferably smaller than that of propylene resin (A). In this case, the difference between the weight average molecular weights of the propylene resin (A) and the propylene resin (B) is preferably 10,000 to 380,000, more preferably 120,000 to 380,000, and particularly preferably 130,000 to 380,000. When the weight average molecular weight of the propylene resin (B) is smaller than that of the propylene resin (A), the propylene resin (B) is more likely to move during molding, and the interaction between the carbon fiber (C) and the propylene resin (B) is expected to become stronger.

The weight average molecular weight of the propylene resin (B) is preferably 1,000 to 100,000 in view of the above described interaction and compatibility with the propylene resin (A), preferably with the propylene resin component (A-2). The weight average molecular weight is more preferably 2,000 to 80,000, further preferably 5,000 to 50,000, and particularly preferably 5,000 to 30,000.

The weight average molecular weight is determined by gel permeation chromatography (GPC) in the present invention.

The melt flow rate (ASTM 1238, 230°C, 2.16 kg load) of the propylene resin (B) is preferably 3 to 500 g/10min. The lower limit of the melt flow rate is more preferably 5 g/10min, and particularly preferably 7 g/10min. The upper limit of the melt flow rate is more preferably 400 g/10min, and particularly preferably 350 g/10min.

The carbon fiber bundle may include other components in combination, in addition to the propylene resin (A) and the propylene resin (B), as long as the effects of the present invention are not impaired. For example, when the propylene resin in the emulsion form is used for the carbon fiber bundle, a surfactant for stabilizing the emulsion form may be added separately. The amount of the other components added is preferably 10 parts by mass or less, more preferably 5 mass% or less, and particularly preferably 2 mass% or less, based on 100 parts by mass of the total of the propylene resin (A) and the propylene resin (B).

When the entire carbon fiber bundle is 100 mass%, the total content of propylene resin (A) and propylene resin (B) in the carbon fiber bundle is preferably 0.3 to 5 mass% from the viewpoint of balancing adhesion and handling of the carbon fiber bundle. The lower limit of the total content is preferably 0.4 mass%. The upper limit of the total content is preferably 4 mass%, and more preferably 3 mass%.

The matrix resin (XA) is preferably a propylene polymer (D) described below. Thermoplastic resins other than the propylene polymer (D) can also be used, for example, polycarbonate resin, styrene resin, polyamide resin, polyester resin, polyphenylene sulfide resin (PPS resin), modified polyphenylene ether resin (modified PPE resin), polyacetal resin (POM) resin, liquid crystal polyester, polyarylate, an acrylic resin such as polymethylmethacrylate resin (PMMA), vinyl chloride, polyimide (PI), polyamideimide (PAI), polyetherimide (PEI), polysulfone, polyethersulfone, polyketone, polyetherketone, polyetheretherketone (PEEK), polyethylene, polypropylene other than the propylene polymer (D) described below, polybutene, a polyolefin such as poly(4-methyl-1-pentene), modified polyolefin, phenol resin, and phenoxy resin. Furthermore, copolymers such as the following can also be used: ethylene/propylene copolymer, ethylene/1-butene copolymer, ethylene/propylene/diene copolymer, ethylene/carbon monoxide/diene copolymer, ethylene/ethyl (meth)acrylate copolymer, ethylene/glycidyl (meth)acrylate copolymer, and ethylene/vinyl acetate/glycidyl (meth)acrylate copolymer. Two or more resins may be used in combination as the matrix resin (XA). In particular, a polyolefin resin having a low polarity is preferred, and an ethylene resin or a propylene resin is more preferred from the viewpoint of cost and light weight. The propylene resin (D) described below is particularly preferred.

The propylene resin (D) may be a resin composed of only an unmodified propylene resin, or may contain an unmodified propylene resin and a modified propylene resin that contains a carboxylic acid or a carboxylate. In particular, the propylene resin (D) preferably contains an unmodified propylene resin (unmodified product) and a modified propylene resin (modified product). The preferable mass ratio (unmodified product / modified product) is preferably 80/20 to 99/1, more preferably 89/11 to 99/1, particularly preferably 89/11 to 93/7, and most preferably 90/10 to 95/5. As for the unmodified and modified propylene resins to be used as the propylene resin (D), propylene resins containing structural units derived from the monomers (for example, olefins and carboxylic acid ester compounds) described in the description for the propylene resin (A) and propylene resin (B) are preferred. For example, any of homopolypropylene, random polypropylene, block polypropylene, and modified polypropylene can be used as the propylene resin (D).

The weight average molecular weight of the propylene resin (D) preferably has the following relationship with those of the propylene resin (A) and the propylene resin (B) described above.

Propylene resin (A) > Propylene resin (D) > Propylene resin (B)

The weight average molecular weight of the propylene resin (D) is preferably 50,000 to 350,000, more preferably 100,000 to 330,000, and particularly preferably 150,000 to 320,000. When the weight average molecular weight of the propylene resin (D) is smaller than that of the propylene resin (A), the difference in weight average molecular weight between the two resins is preferably 10,000 to 400,000, more preferably 20,000 to 200,000, and particularly preferably 20,000 to 100,000.

The content of the carbon fiber (C) in the carbon fiber reinforced thermoplastic resin composition is preferably 25 to 75 parts by mass, more preferably 30 to 68 parts by mass, and particularly preferably 35 to 65 parts by mass. The content of the propylene resin (D) in the carbon fiber reinforced thermoplastic resin composition is preferably 25 to 75 parts by mass, more preferably 32 to 70 parts by mass, and particularly preferably 35 to 65 parts by mass. These contents are values with the total of the carbon fiber (C) and the propylene resin (D) as 100 parts by mass.

The propylene resin (D) is preferably configured so as to adhere around a carbon fiber bundle (which mainly contains a carbon fiber (C), a propylene resin (A), and a propylene resin (B)).

The propylene resin (D) preferably contains an unmodified propylene resin and an acid-modified propylene resin. In particular, when a relatively large amount of modified propylene resin is contained, the structure between the carbon fiber and the resin is less likely to change even when, for example, a laser fusion method is used.

The mass ratio (C/I) of the carbon fiber (C) to the polymer (I) (the resin component in layer (X)) in the carbon fiber reinforced thermoplastic resin fabric layer (X) used in the present invention is typically 80/20 to 20/80, preferably 75/25 to 30/70, more preferably 70/30 to 35/65, particularly preferably 65/35 to 40/60, and most preferably 60/40 to 40/60.

The melting point and/or glass transition temperature of the polymer (I) is 50 to 400°C. The lower limit thereof is preferably 70°C, more preferably 80°C. The upper limit thereof is preferably 350°C, more preferably 300°C, and particularly preferably 270°C. In addition, the specified temperature range is preferably with respect to the melting point. In particular, the upper limit of the melting point is preferably 250°C, more preferably 240°C.

The polymer (I) preferably contains a resin that has a carboxylic acid group and/or a carboxylate group. When the total of the carbon fiber (C) and the polymer (I) in the carbon fiber reinforced thermoplastic resin composition is 100 parts by mass, the content of the structural unit having a carboxylic acid group and/or a carboxylate group is preferably 0.010 to 0.045 parts by mass, more preferably 0.012 to 0.040 parts by mass, and particularly preferably 0.015 to 0.035 mass%. Examples of the structural unit having a carboxylic acid group and/or a carboxylate group include the structural units derived from a carboxylic acid group and a carboxylate group contained in the propylene resin (A), the propylene resin (B), and the propylene resin (D).

When the polymer (I) contains a carboxylic acid group, the content thereof can be evaluated by the acid value. The acid value of the polymer (I) is preferably 0.1 to 0.55 mg-KOH/g, more preferably 0.12 to 0.45 mg-KOH/g, and particularly preferably 0.13 to 0.40 mg-KOH/g.

A preferable melt flow rate (ASTM 1238, 230°C, 2.16 kg load) of the polymer (I) is typically 1 to 500 g/10min, preferably 3 to 300 g/10min, and more preferably 5 to 100 g/10min. The weight average molecular weight of the polymer (I) is preferably 50,000 to 400,000, more preferably 100,000 to 370,000, and particularly preferably 150,000 to 350,000.

Single fibers forming a carbon fiber bundle is preferably coated with a mixture containing a propylene resin (A) and a propylene resin (B) on 60% or more of the single fiber surface for exhibiting stronger adhesion.

A preferred shape of the carbon fiber bundle is that of a molded product of a unidirectional carbon fiber reinforced thermoplastic resin in which continuous fibers are aligned in one direction and composited with a thermoplastic resin.

The carbon fiber reinforced thermoplastic resin composition may contain a dye (P) that absorbs light having a wavelength of 300 to 3,000 µm. As such a dye, any known dye can be used. Preferred example of the dye is a carbon-based dye. More preferred example is carbon black. The content of such a dye (P) is preferably 0.01 to 5 mass% in 100 mass% of the entire carbon fiber reinforced thermoplastic resin. The lower limit of the content is more preferably 0.1 mass%, particularly preferably 0.2 mass%. The upper limit of the content is preferably 3 mass%, and more preferably 2 mass%.

The present invention uses a fabric containing unidirectional fiber reinforced resin sheets, each unidirectional fiber reinforced resin sheets containing continuous carbon fibers and a thermoplastic resin as described above, in which the carbon fibers are aligned in the longitudinal direction of the sheet, as warp and weft.

Specifically, for example, a fabric obtained by weaving unidirectional fiber reinforced resin sheets in a tape form as warp and weft can be used. The weaving method is not particularly limited, and the fabric may be produced by a known method such as plain weave, twill weave, sateen weave, saya ori (fret weave), and checkered weave. In particular, plain weave and twill weave are preferred.

The size of the unidirectional fiber reinforced resin sheets may be any size as long as the sheet can be used as the warp or weft during weaving. For example, a unidirectional fiber reinforced resin sheet in a tape form has a width of preferably 1 mm to 50 mm, more preferably 3 mm to 40 mm, and particularly preferably 5 mm to 30 mm. When the width is equals to or more than the lower limit of these ranges, for example, the ends of the sheets are less likely to come into contact during weaving, and as a result, fluff is less likely to be generated. Further, when the width is equal to or less than the upper limit of these ranges, the laminate is more likely to follow the three-dimensional shape, and cracks and wrinkles are less likely to occur when the three-dimensional shape is given.

The aperture rate of the fabric is preferably 0.01 to 20%, more preferably 0.01 to 10%, and particularly preferably 0.01 to 1%. When the aperture rate is equal to or more than the lower limit of these ranges, the area of a part of the laminate where the foam layer (Y) is exposed decreases, and the strength is more likely to improve accordingly. When the aperture rate is equal to or less than the upper limit of these ranges, the range of movement between the unidirectional fiber reinforced resin sheets, which are the warp and weft of a fabric, increases, and thus cracks and wrinkles are less likely to occur when the three-dimensional shape is given. The aperture rate of the fabric can be changed by controlling the distance between the unidirectional fiber reinforced resin sheets used as warp and weft threads. The specific method for measuring the aperture rate will be described in the Examples below.

### Foam Layer (Y)

In present invention, the resin (YA) contained in the foam layer (Y) (hereinafter referred to as "foam resin (YA)") is not particularly limited, and various known resins can be used. The foam resin (YA) may be a cross-linked resin or a non-cross-linked product. Specific examples of the foam resin (YA) include thermoplastic resin foams such as polyethylene-based resin foams, polypropylene-based resin foams, polystyrene-based resin foams, and polystyrene-based resin foams having a polypropylene-based resin foam as the outer layer thereof. In particular, the foam resin (YA) is preferably composed of the same type of thermoplastic resin as the matrix resin (XA) contained in the carbon fiber reinforced thermoplastic resin fabric layer (X), and both of the resins are preferably propylene polymers. This configuration tends to further improve the adhesive strength. "The same type of thermoplastic resin" means that both the matrix resin (XA) and the foam layer (Y) contain, for example, a polyolefin resin. As the polyolefin in this context, for example, even when the matrix resin (XA) contains polypropylene and the foam layer (Y) contains polybutene, both resins contain a polyolefin resin, so that the matrix resin (XA) and the foam layer (Y) contain "the same type of thermoplastic resin." The same meaning is applied to resins other than the polyolefin resins, such as polycarbonate resin, styrene resin, polyester resin, polyphenylene sulfide resin (PPS resin), modified polyphenylene ether resin (modified PPE resin), polyacetal resin (POM) resin, liquid crystal polyester, polyarylate, an acrylic resin such as polymethylmethacrylate resin (PMMA), vinyl chloride, polyimide (PI), polyamideimide (PAI), polyetherimide (PEI), polysulfone, polyethersulfone, polyketone, polyetherketone, polyetheretherketone (PEEK), polyolefin, modified polyolefin, phenol resin, phenoxy resin, and polyamide resin. The phrase "both of the resins are propylene polymers" means that both the matrix resin (XA) and the foam layer (Y) contain a polymer with 50 mass% or more of propylene as a constituent unit. Herein, the terms "resin" and "polymer" are the same concept and are not distinguished.

The density of the foam layer (Y) is 0.2 to 0.6 g/cc, preferably 0.25 to 0.4 g/cc. The bubbles in the foam resin (YA) can be independent bubbles or continuous bubbles. In general, a foam resin with independent bubbles tends to have higher strength.

The foaming ratio of the foam layer (Y) is preferably 1.3 to 5 times, and more preferably 2 to 4 times.

The foam layer (Y) may include a rib structure, and more specifically, the foam layer (Y) may include a non-foamed rib structure in a part thereof. The rib structure can, for example, prevent shrinkage and deformation of the foam. The rib structure may be in any form, such as a lattice shape, a stripe shape, a columnar shape, or an annular shape. These shapes may take a form so as to overlap each other. The rib structure may have a form such that ribs in the cross-sectional direction in the shape of, for example, a lattice are formed on the entire front and back surfaces of the foam layer (Y), or on the entire front or back surface or part of the front or back surface. The structure on the front surface and the structure on the back surface may be connected. An example of the method for forming a non-foamed rib structure in a part of the foam layer (Y) is to bring a heated knife into contact with a part of the foam layer (Y) to thermally melt the layer at a desired position. Another example of the method is to press a heated rod-shaped metal against the foam layer (Y) thereby forming a columnar shape rib, or to press a heated pipe-shaped metal against the foam layer (Y) thereby forming an annular shape rib.

### Laminate

A laminate of the present invention includes carbon fiber reinforced thermoplastic resin fabric layers (X) each containing a fabric, and foam layer (Y) of a thermoplastic resin in a layer structure having the order of layer (X) / layer (Y) / layer (X). The fabric contains contains unidirectional fiber reinforced resin sheets as warp and weft. Each of the unidirectional fiber reinforced resin sheets contain carbon fibers and a thermoplastic resin, and the carbon fibers are aligned in the longitudinal direction in each sheet.

The layer (X) and the layer (Y) may be in direct contact with each other, or the layers may be stacked with another layer (such as an intermediate layer) therebetween. The preferred form is a laminated structure having a portion where the layer (X) and layer (Y) are in contact with each other. Examples of the other layers include resin sheets that are not fiber reinforced, short fiber reinforced resin sheets, resin sheets having unidirectional fibers having a length of 1 to 50 mm and reinforced in random directions, and resin mats with a form in which fibers are intertwined in a non-woven manner. Examples of the fiber used for the other layer include metal fibers such as aluminum fiber, brass fiber, and stainless fiber, carbon fibers and graphite fibers such as polyacrylonitrile-, rayon-, lignin- and pitch-based fibers, inorganic fibers such as glass fiber, silicon carbide fiber, and silicon nitride fiber, and organic fibers such as aramid fiber, polyparaphenylene benzobisoxazole (PBO) fiber, polyphenylene sulfide fiber, polyester fiber, acrylic fiber, nylon fiber, and polyethylene fiber. These fibers may be used individually or in combination.

The carbon fiber reinforced thermoplastic resin fabric layer (X) has a thickness (x) of preferably 0.05 to 5 mm, more preferably 0.1 to 2 mm. When the thickness (x) is equal to or less than the upper limit of these ranges, it becomes easier to give a three-dimensional shape. When the thickness (x) is equal to or more than the lower limit of these ranges, the breaking strength of the fiber is more likely to improve. When the thickness of the unidirectional fiber reinforced resin sheet is small and the thickness of the fabric is small, a plurality of unidirectional fiber reinforced resin sheets may be stacked and used for weaving to obtain a fabric, or a plurality fabrics may be stacked.

The foam layer (Y) has a thickness (y) of preferably 1 to 11.7 mm, more preferably 2 to 10 mm. When the foam layer (Y) includes a rib structure, the thickness (y) of the foam layer (Y) means the thickness of a portion (main portion) other than the rib structure. Further, when the foam layer (Y) includes a portion (other than the rib structure, for example, a partially convex portion) where the thickness partially changes, the thickness (y) of the foam layer (Y) means the thickness of a portion (main portion) other than that portion.

The thickness (overall thickness) of the laminate of the present invention is preferably 1 to 12 mm, more preferably 2 to 10 mm, and particularly preferably 3 to 8 mm. When the thickness of the laminate is equal to or less than the upper limit of these ranges, the laminate is more likely to follow the three-dimensional shape, and thus cracks are less likely to occur. When the thickness of the laminate is equal to or more than the lower limit of these ranges, the strength of the laminate is more likely to improve.

The ratio (y/x) of the thickness (y) of the foam layer (Y) to the thickness (x) of the carbon fiber reinforced thermoplastic resin fabric layer (X) is 3 to 40, preferably 5 to 30.

When the longitudinal direction of the laminate of the present invention is 0°, the angle of fiber orientation in at least one of the unidirectional fiber reinforced resin sheet of the fabric contained in the carbon fiber reinforced thermoplastic resin fabric layer (X) is preferably ±30 to ±60°, more preferably ±40 to ±50°. When the angle of fiber orientation is within these ranges, cracks are less likely to occur when a three-dimensional shape is given. When the laminate is rectangular, the "longitudinal direction" of the laminate means the direction of the long side, and when the laminate has another shape, the "longitudinal direction" of the laminate means the direction of the longest side among the all sides of the shape.

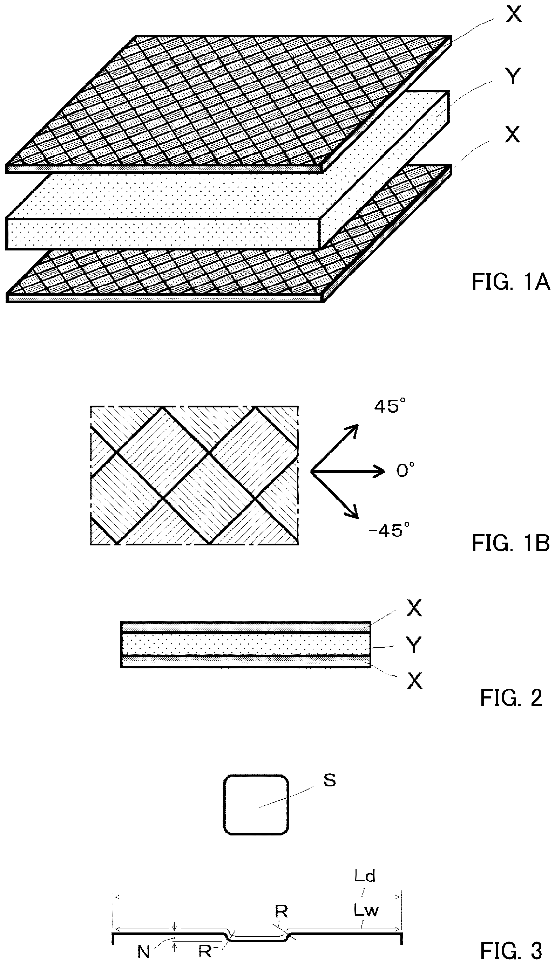

FIG. 1A is a schematic perspective view for explaining a layer structure of an embodiment of the laminate of the present invention, and FIG. 1B is a schematic partially enlarged plan view of the laminate. FIG. 2 is a schematic cross-sectional view of the laminate.

In the embodiment illustrated in FIGS. 1A and 1B, the layer structure is formed from the carbon fiber reinforced thermoplastic resin fabric layers (X) and the foam layer (Y) of the thermoplastic resin in the order of layer (X) / layer (Y) / layer (X). The carbon fiber reinforced thermoplastic resin fabric layer (X) is composed of a fabric which is obtained by plain weaving unidirectional fiber reinforced resin sheets in a tape form as the warp and weft, each of the unidirectional fiber reinforced resin sheets contains continuous carbon fibers and a thermoplastic resin. In the unidirectional fiber reinforced resin sheet, the carbon fibers are aligned in the longitudinal direction. When the longitudinal direction of the laminate is 0°, the angle of fiber orientation of the unidirectional fiber reinforced resin sheet of the fabric contained in the carbon fiber reinforced thermoplastic resin fabric layer (X) is ±45°, as shown in FIG. 1B.

The present invention is not limited to the embodiment illustrated in FIG. 1A to FIG. 2. For example, the angle of fiber orientation is ±45° in FIGS. 1A and 1B, but this angle may be appropriately changed as desired. In place of the fabric obtained by the plain weave, a fabric obtained by another weaving method may be also used. Two or more fabrics (fabrics of unidirectional fiber reinforced resin sheets) may be stacked on the top layer (X) and/or the bottom layer (X) for use, and/or another component (for example, a release film) or another layer may be provided on the surface of the top layer (X) and/or the bottom layer (X).

The entire shape of the laminate is rectangular in the embodiment illustrated in FIG. 1A to FIG. 2, but the present invention is not limited thereto. The shape can be determined according to the desired application.

The laminate of the present invention may be produced by any method. For example, layers may be sequentially stacked and used as a laminate as they are, an adhesive may be used to bond part or all of the interface of layers, or a device such as a presser or an iron may be used to press and heat the layers to fuse part or all of the interface of the layers. An adhesive tape may be used to fix the edges of layers, or at least one pin made of a resin may be used to stick into any part of layers to fix the positions of the layers.

In particular, the method in which part or all of the interface of the layers is fused by pressing and heating is preferred as a method for producing the laminate of the present invention described above. The pressing pressure and time are not particularly limited, and may be any appropriate pressure and time for suitably fusing part or all of the interface of the layers. The optimal heating temperature varies depending on the type of resin component in each layer, but is typically 100 to 450°C, preferably 150 to 300°C. The preferred method for producing a three-dimensional shaped laminate will be described below.

### Three-Dimensional Shaped Laminate

A three-dimensional shaped laminate of the present invention is obtained by giving a three-dimensional shape to the laminate of the present invention. The specific form of the three-dimensional shape is not particularly limited, and may be any shape obtained by giving a shape other than a flat shape on its surface.

FIG. 3 shows a schematic cross-sectional view illustrating a three-dimensional shape of the three-dimensional shaped laminate of the present invention and a schematic plan view of the three-dimensional shape. The three-dimensional shaped laminate of the present invention is resistant to cracking even when such a concave three-dimensional shape is given thereto.

In FIG. 3, in the cross-section of the portion containing the three-dimensional shape of the three-dimensional shaped laminate, the maximum value of the ratio (Lw/Ld) of the cross-sectional perimeter (Lw) to the linear length (Ld) between the end points of the cross-section is preferably 1.01 to 1.60, more preferably 1.05 to 1.5. Hereafter, this ratio (Lw/Ld) is referred to as the "pressing amount (Lw/Ld)." When there are a plurality of three-dimensional shapes, the number of pressing amounts (Lw/Ld) may also become more than one, but the maximum value of the pressing amount (Lw/Ld) means the maximum value among those different pressing amounts (Lw/Ld).

In FIG. 3, the projected area (S) of the three-dimensional shape when viewed in a plan view in the thickness direction of the three-dimensional shaped laminate is preferably 100 to 3,000 mm², more preferably 150 to 2,000 mm². The depth (N) of the three-dimensional shape in the thickness direction of the three-dimensional shaped laminate is preferably 1 to 100 mm, more preferably 2 to 80 mm.

In FIG. 3, the minimum value of the bending radius (R) in the three-dimensional shape of the three-dimensional shaped laminate is preferably 0.5 to 10.0 mm, and more preferably 0.7 to 3.0 mm. The bending radius (R) of a three-dimensional shape generally varies depending on the position. The minimum value of the bending radius (R) means the smallest value among those different bending radii (R).

The three-dimensional shape illustrated in FIG. 3 is a quadrangle in concave shape, but the present invention is not limited thereto. The shape can be determined according to the desired application. There can be a plurality of three-dimensional shapes, and the number of shapes can be determined according to the desired application.

The method for producing a three-dimensional shaped laminate of the present invention may be any known method capable of giving a three-dimensional shape. For example, it is known that a desired three-dimensional shape can be given by a method such as a heat press method or a vacuum molding method. In the present invention, a method of giving a desired three-dimensional shape by subjecting the laminate of the present invention to heat press processing (herein also referred to as "heat pressing") is particularly preferred. Hereinafter, the heat pressing will be described.

For giving a desired three-dimensional shape to a laminate of the present invention by the heat pressing, the laminate to be subjected to the heat pressing may be, for example, a laminate obtained by only sequentially stacking layers, a laminate obtained by bonding part or all of the interface of layers with an adhesive, or a laminate obtained by pressing and heating layers to fuse part or all of the interface of the layers with the use of a device such as a presser or an iron. As the laminate to be subjected to the heat pressing, a laminate obtained by fusing part of the interface of the layers with the use of a device such as an iron is particularly preferred for the heat pressing. The heating temperature, pressing pressure, and pressing time in this case are as described above. In the heat pressing, using a laminate in which a part of the interface of the layers is partially fused for the heat pressing is less likely to generate wrinkles and gloss defects, thereby obtaining a superior appearance as compared with using of a laminate in which all of the interface of the layers is fused. The carbon fiber reinforced thermoplastic resin fabric layer (X) in the laminate, in which part of the interface of layers is partially fused, includes unfused part and thus has relatively high flexibility even at room temperature. Thus, when there are places where heating is insufficient (when uneven heating occurs), this carbon fiber reinforced thermoplastic resin fabric layer (X) with high flexibility is more likely to be able to sufficiently adhere to a mold. As a result, it is considered that the ability of three-dimensional shaping is further improved, thus wrinkles and gloss defects are less likely to occur, thereby obtaining a superior appearance. In addition, as part of the interface of the layer is fused, a positional error between the layers does not occur.

As the heat pressing for giving a desired three-dimensional shape to the laminate of the present invention, processing by a heat and cool method and processing by a stamping method are preferred, and processing by a stamping method is particularly preferred.

In the heat and cool method, a laminate is pressed and heated in a mold, and then cooled while the pressed state is maintained. The heating temperature in the heat and cool method varies depending on the type of resin component in each layer, but is typically 100 to 450°C, preferably 150 to 300°C. The pressing pressure is typically 0.5 to 30 MPa, preferably 1 to 10 MPa. The preheating time in the mold is typically 1 to 30 minutes, preferably 2 to 10 minutes. The pressing time after the mold is completely closed is typically 0.5 to 5 minutes, preferably 1 to 3 minutes.

In the stamping method, a laminate is heated outside a mold by using an external heating method such as an infrared heater, and then the heated laminate is put into the mold for pressing and cooling. In the stamping method, a laminate can be heated uniformly outside a mold, so heat unevenness is less likely to occur in the laminate. As a result, the stamping method is less likely to cause appearance defects such as uneven gloss as compared with the heat and cool method. The heating temperature in the stamping method varies depending on the type of resin component in each layer, but is typically 100 to 450°C, preferably 150 to 300°C. The pressing pressure is typically 0.5 to 30 MPa, preferably 1 to 10 MPa. The pressing time is typically 0.5 to 5 minutes, preferably 1 to 3 minutes.

The laminate and the three-dimensional shaped laminate of the present invention are useful, for example, as an exterior material for an application selected from transportation equipment applications, home appliances equipment applications, and building applications. Herein, the "exterior material" means a member that is disposed so as to separate an inside from an outside to protect the inside or the outside, and may or may not have a decorative purpose. The exterior material is disposed, for example, at a location where there is a possibility of being subjected to a high speed impact or an impact from a high energy object from the outside. Examples of the high speed impact include impacts from stepping stones that occur while driving a vehicle and impacts from other vehicles. Examples of the high energy object include engines, motors, and high-performance batteries used in transportation vehicles, and motors, compressors, and high-performance batteries used in home appliances and communication devices. Large vehicles such as construction vehicles may also be considered high energy objects themselves.

Specific examples of exterior materials used for transportation equipment applications include flooring materials, roofs, trunks, hoods, doors, and fenders of vehicles. Specific examples of exterior materials used in home appliances equipment applications include housings of personal computers and tablets, and components of washing machines, refrigerators, and televisions. Specific examples of exterior materials used for building applications include wall materials, partitions, flooring materials, ceiling materials, and doors. In particular, the laminate and the three-dimensional shaped laminate of the present invention are extremely useful as exterior materials (for example, flooring materials, under guards, and mat guards of vehicles) which are located on surfaces exposed to flying pebbles and other foreign objects, soundproof walls, and curing members at construction sites.

### Examples

Hereinafter, the present invention will be described in more detail with reference to Examples. The materials used in the Examples are as follows.

### Example 1

### Production of Fabric of Unidirectional Fiber reinforced Resin Sheet

A unidirectional carbon fiber reinforced resin sheet (manufactured by Mitsui Chemicals, Inc., product name TAFNEX, fiber volume fraction (Vf) 50%, thickness 0.16 mm) containing polypropylene and carbon fiber was cut to be 12.5 mm wide. A fabric of a unidirectional carbon fiber reinforced resin sheets was woven by plain weaving this cut unidirectional carbon fiber reinforced resin sheet in a tape form in such a way that the fabric has the aperture rate of 0.38% and the distance between warp and weft threads of about 0.05 mm to about 1 mm on average.

The method of measuring the aperture rate of this fabric is as follows. First, a range of 40 × 40 mm was photographed with a 12-megapixel camera. The image was converted to black and white 16-bit by using image analysis software (product name Image J), and then a threshold value was automatically determined and binarized using the Yen algorithm. After that, the image was made into a histogram and calculated, and the number of white data / total data was obtained as the aperture rate.

### Production of Three-Dimensional Shaped Laminate

The fabric of the unidirectional fiber reinforced resin sheet obtained as described above and a polypropylene foam sheet (manufactured by Mitsui Chemicals Tohcello Inc., product name PAULOWNIA, density 0.3 g/cc, foaming ratio 3 times) with a thickness of 5 mm were each cut to have a shape of 157 mm (length) × 240 mm (width). The fabric of the unidirectional fiber reinforced resin sheet / the polypropylene foam sheet / the unidirectional fiber reinforced resin sheet were stacked in this order, and in addition, a polyimide film was disposed as a release film on the outermost surface. Through the polyimide film, only the four corners (four corner portions) of the laminate were heated for 5 seconds by using an iron with a surface temperature of about 200°C. The release film was then peeled off to obtain a laminate in which only the interfaces of the layers at the four corners were fused together. When the longitudinal direction of the laminate was 0°, the angle of the fiber orientation of the unidirectional fiber reinforced resin sheet in the fabric was set to ±45°.

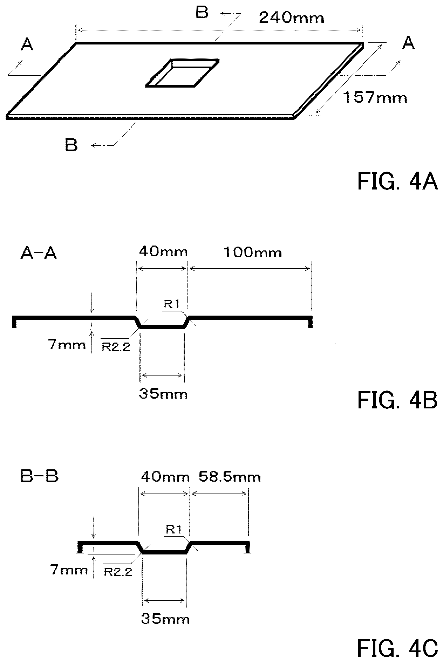

Processing by a stamping method was performed to give a three-dimensional shape as illustrated in FIG. 4 to the laminate obtained as described above. The process is specifically as follows. The laminate was heated at 270°C for 1.5 minutes in an oven (manufactured by Yamato Scientific Co., Ltd., apparatus name DH832). The heated laminate was then taken out of the oven and put into the mold of a 250-ton press machine (manufactured by Ogihara Corporation), and cooled and press-molded under the conditions of a mold temperature of 95°C, a pressure of 3 MPa, and a mold clamping time of 3 minutes to obtain a three-dimensional shaped laminate. The thicknesses of the layers were 0.32 mm / 4.36 mm / 0.32 mm. The ratio (y/x) of the thickness (y) of the polypropylene foam sheet layer to the thickness (x) of the fabric layer was 13.63.

FIG. 4A is a schematic perspective view illustrating the shape of the mold used for press molding in the present example, FIG. 4B is a schematic cross-sectional view of the mold taken along the line A-A, and FIG. 4C is a schematic cross-sectional view of the mold taken along the line B-B. Each item of the three-dimensional shaped laminate with a recess formed in the central portion thereof by heat press molding in the present example is as follows.
Pressing amount in the longitudinal direction (Lw/Ld): 1.0375
Pressing amount in the width direction (Lw/Ld): 1.0573 = maximum value
Projected area (S) of recess: 40 mm × 40 mm = 1600 mm²
Depth (N) of recess: 7 mm
Minimum value of the bending radius (R) of recess: 1.0 mm

### Example 2

A three-dimensional shaped laminate was obtained in the same manner as in Example 1 except that the angle of a fiber orientation of the unidirectional fiber reinforced resin sheet in the fabric were changed to 0° and 90°. The thicknesses of the layers were 0.32 mm / 4.36 mm / 0.32 mm. The ratio (y/x) of the thickness (y) of the polypropylene foam sheet layer to the thickness (x) of the fabric layer was 13.63.

### Example 3

A three-dimensional shaped laminate was obtained in the same manner as in Example 2 except that the width of the sheet used for the plain weaving was changed to 25.0 mm, and the aperture rate was changed to 0.09% in the production of the fabric of the unidirectional fiber reinforced resin sheet. The thicknesses of the layers were 0.32 mm / 4.36 mm / 0.32 mm. The ratio (y/x) of the thickness (y) of the polypropylene foam sheet layer to the thickness (x) of the fabric layer was 13.63.

### Example 4

A three-dimensional shaped laminate was obtained in the same manner as in Example 1 except that a polypropylene foam sheet (manufactured by Mitsui Chemicals Tohcello Inc., product name PAULOWNIA, density 0.3 g/cc, foaming ratio 3 times) with a thickness of 8 mm was used in place of the polypropylene foam sheet with a thickness of 5 mm of Example 1 in the production of the three-dimensional shaped laminate. The thicknesses of the layers were 0.32 mm / 7.36 mm / 0.32 mm. The ratio (y/x) of the thickness (y) of the polypropylene foam sheet layer to the thickness (x) of the fabric layer was 23.

### Example 5

In the production of the three-dimensional shaped laminate, the fabric of the unidirectional fiber reinforced resin sheet / the polypropylene foam sheet / the unidirectional fiber reinforced resin sheet were stacked in this order in the same manner as in Example 4. The obtained laminate was heat press molded at a mold temperature of 180°C to obtain a laminate in which the interface of the layers was entirely fused.

Processing by a stamping method was performed to give a three-dimensional shape as illustrated in FIG. 4 to the laminates obtained as described above. The process is specifically as follows. The laminate was heated by using a 300 kN heating/cooling two-stage press molding machine (manufactured by Kansai Co., Ltd.) under the conditions of a mold temperature of 180°C and a preheating time of 5 minutes. The laminate was then pressed at a preload of 2.5 MPa for 1 minute, further pressed at a pressure of 10 MPa for 2 minutes, and then cooled and press-molded for 2 minutes at a mold temperature of 180°C while the pressure of 10 MPa was maintained to obtain a three-dimensional shaped laminate. The thicknesses of the layers were 0.32 mm / 7.36 mm / 0.32 mm. The ratio (y/x) of the thickness (y) of the polypropylene foam sheet layer to the thickness (x) of the fabric layer was 23.

### Example 6

A three-dimensional shaped laminate was obtained in the same manner as in Example 1 except that a polypropylene foam sheet (manufactured by Mitsui Chemicals Tohcello Inc., product name PAULOWNIA, density 0.3 g/cc, foaming ratio 3 times) with a thickness of 3 mm was used in place of the polypropylene foam sheet with a thickness of 5 mm of Example 1 in the production of the three-dimensional shaped laminate. The thicknesses of the layers were 0.32 mm / 2.36 mm / 0.32 mm. The ratio (y/x) of the thickness (y) of the polypropylene foam sheet layer to the thickness (x) of the fabric layer was 7.38.

### Example 7

A three-dimensional shaped laminate was obtained in the same manner as in Example 1 except that the heat and cool method was used in place of the stamping method in the production of the three-dimensional shaped laminate. The process is specifically as follows. A laminate was inserted into a mold at 200°C, and then the mold was closed while the resin components in the laminate were gradually softened. After the mold was completely closed, the laminate was heat press molded for 2 minutes under a pressure of 3 MPa. The mold temperature was then lowered to 90°C while the pressure of 3 MPa was maintained, and the cooling was performed for 2 minutes from the time when the mold temperature reached 90°C. Subsequently, the laminate was taken out (three-dimensional shaped laminate was obtained). The thicknesses of the layers were 0.32 mm / 4.36 mm / 0.32 mm. The ratio (y/x) of the thickness (y) of the polypropylene foam sheet layer to the thickness (x) of the fabric layer was 13.63.

### Comparative Example 1

In place of the lower and upper fabrics of unidirectional fiber reinforced resin sheets, four unidirectional fiber reinforced resin sheets of the same size as the fabric (157 mm (length) × 240 mm (width)) were used for stacking in the following order: unidirectional fiber reinforced resin sheet in 0° direction / unidirectional fiber reinforced resin sheet in 90° direction / polypropylene foam sheet / unidirectional fiber reinforced resin sheet in 90° direction / unidirectional fiber reinforced resin sheet in 0° direction. Processing by a stamping method was performed to the obtained laminate in the same manner as in Example 1 to obtain a three-dimensional shaped laminate. The thicknesses of the layers were 0.16 mm / 0.16 mm / 4.36 mm / 0.16 mm / 0.16 mm.

### Comparative Example 2

In place of the lower and upper fabrics of unidirectional fiber reinforced resin sheets, four unidirectional fiber reinforced resin sheets of the same size as the fabric (157 mm (length) × 240 mm (width)) were used for stacking in the following order: unidirectional fiber reinforced resin sheet in 45° direction / unidirectional fiber reinforced resin sheet in -45° direction / polypropylene foam sheet / unidirectional fiber reinforced resin sheet in -45° direction / unidirectional fiber reinforced resin sheet in 45° direction. Processing by a stamping method was performed to the obtained laminate in the same manner as in Example 1 to obtain a three-dimensional shaped laminate. The thicknesses of the layers were 0.16 mm / 0.16 mm / 4.36 mm / 0.16 mm / 0.16 mm.

The following evaluation was made for the three-dimensional shaped laminates of Examples and Comparative Examples obtained as described above. Tables 1 to 3 show the results.

### Evaluation of Crack

A three-dimensional shape portion of a three-dimensional shaped laminate and the surrounding area of the portion were visually observed and evaluated according to the following criteria.
Good: There was no crack, or there was a fine crack(s) of less than 5 mm.
Fair: There was a crack(s) of 5 mm or more.
Poor: There was a significant crack(s) of 5 mm or more, and the foam layer was visible through the cracked portion(s).

### Evaluation of Wrinkle

A three-dimensional shape portion of a three-dimensional shaped laminate and the surrounding area of the portion were visually observed and evaluated according to the following criteria.
Good: There was no wrinkle.
Fair: There was a fine wrinkle(s) of less than 5 mm.
Poor: There was a significant wrinkle(s) of 5 mm or more.

### Evaluation of Shrinkage

The percentage of the shrinkage amount (hereinafter also referred to as "shrinkage") of a fabric of a three-dimensional shaped laminate after molding was calculated with the length of the fabric in the longitudinal direction before the molding as 100, and evaluated according to the following criteria.
Good: The shrinkage was less than 1% of the length before molding.
Fair: The shrinkage was 1% or more and less than 5% of the length before molding. Bad: The shrinkage was 5% or more of the length before molding.

### Evaluation of Gloss

A gloss meter (manufactured by KONICA MINOLTA, INC., product name GM-268) was used, and white light with the spectral characteristics of CIE standard light source C was used as the light source. The arithmetic mean of reflectance values (N = 5) (arithmetic mean reflectance) at a light receiving angle of 60° was obtained. Gloss was evaluated according to the criteria below.
Excellent: The arithmetic mean reflectance was 50% or more, and the difference between the minimum and maximum reflectance values was within 20% of the arithmetic mean reflectance.
Good: The arithmetic mean reflectance was 50% or more, and the difference between the minimum and maximum reflectance values was more than 20% of the arithmetic mean reflectance.
Fair: The arithmetic mean reflectance was 10% or more and less than 50%.
Bad: The arithmetic mean reflectance was less than 10%.

### High Rate Impact Test (Surface Impact Characteristics Test)

A test piece (100 × 100 mm) was fixed to a high speed surface impact test device of the ASTM standard in such a way that the striking core collides with the central part of the piece. The maximum impact force, maximum impact force displacement, maximum impact force energy, and puncture point energy were measured under the following conditions.
Strike core diameter: 1/2 inch
Receiving ring diameter: 1 inch
Measurement temperature: Room temperature
Strike core speed: 3.57 m/s

**Table 1**

| | | | Example 1 | Example 2 | Example 3 |
|---|---|---|---|---|---|
| Production method | Laminate | | Partially fused | Partially fused | Partially fused |
| | Three-dimensional shaped laminate | | Stamping | Stamping | Stamping |
| Three-dimensional shaped laminate | Fabric | Weaving method | Plain weave | Plain weave | Plain weave |
| | | Sheet width (mm) | 12.5 | 12.5 | 25.0 |
| | | Aperture rate (%) | 0.38 | 0.38 | 0.09 |
| | | Thickness (mm) | 0.32 | 0.32 | 0.32 |
| | | Disposition angle | ±45° | 0°/90° | 0°/90° |
| | Foam sheet | Thickness (mm) | 4.36 | 4.36 | 4.36 |
| | Total thickness (mm) | | 5.00 | 5.00 | 5.00 |
| Appearance evaluation | Crack | | Good | Fair | Fair |
| | Wrinkle | | Good | Good | Fair |
| | Shrinkage | | Good | Good | Good |
| | Gloss | | Excellent | Excellent | Excellent |
| Surface impact characteristics | Maximum impact force (kN) | | 3.9 | 3.4 | 3.6 |
| | Maximum impact force displacement (mm) | | 6.9 | 6.5 | 7.4 |
| | Maximum impact force energy (J) | | 12.2 | 9.4 | 10.5 |
| | Puncture point energy (J) | | 16.7 | 14.1 | 16 |

**Table 2**

| | | | Example 4 | Example 5 | Example 6 | Example 7 |
|---|---|---|---|---|---|---|
| Production method | Laminate | | Partially fused | Entirely fused | Partially fused | Partially fused |
| | Three-dimensional shaped laminate | | Stamping | Stamping | Stamping | H & C |
| Three-dimensional shaped laminate | Fabric | Weaving method | Plain weave | Plain weave | Plain weave | Plain weave |
| | | Sheet width (mm) | 12.5 | 12.5 | 12.5 | 12.5 |
| | | Aperture rate (%) | 0.38 | 0.38 | 0.38 | 0.38 |
| | | Thickness (mm) | 0.32 | 0.32 | 0.32 | 0.32 |
| | | Disposition angle | ±45° | ±45° | ±45° | ±45° |
| | Foam sheet | Thickness (mm) | 7.36 | 7.36 | 2.36 | 4.36 |
| | Total thickness (mm) | | 8.00 | 8.00 | 3.00 | 5.00 |
| Appearance evaluation | Crack | | Fair | Fair | Good | Good |
| | Wrinkle | | Good | Good | Good | Good |
| | Shrinkage | | Good | Good | Good | Good |
| | Gloss | | Excellent | Fair | Excellent | Good |
| Surface impact characteristics | Maximum impact force (kN) | | 4.7 | 4.4 | 2.9 | 3.6 |
| | Maximum impact force displacement (mm) | | 9.5 | 9.2 | 6.0 | 6.7 |
| | Maximum impact force energy (J) | | 21 | 20 | 7.0 | 11.2 |
| | Puncture point energy (J) | | 28 | 26 | 12.4 | 15 |

| | | | | | | |
|---|---|---|---|---|---|---|
| H & C: Heat and cool method | | | | | | |

**Table 3**

| | | | Comparative Example 1 | Comparative Example 2 |
|---|---|---|---|---|
| Production method | Laminate | | Partially fused | Partially fused |
| | Three-dimensional shaped laminate | | Stamping | Stamping |
| Three-dimensional shaped laminate | Unidirectional fiber reinforced resin sheet | Thickness (mm) | 0.32 | 0.32 |
| | | Disposition angle | 0°/90° | ±45° |
| | Foam sheet | Thickness (mm) | 4.36 | 4.36 |
| | Total thickness (mm) | | 5.00 | 5.00 |
| Appearance evaluation | Crack | | Poor | Fair |
| | Wrinkle | | Good | Good |
| | Shrinkage | | Poor | Poor |
| | Gloss | | Good | Good |
| Surface impact characteristics | Maximum impact force (kN) | | 3.8 | 3.8 |
| | Maximum impact force displacement (mm) | | 6.9 | 7.1 |
| | Maximum impact force energy (J) | | 10.1 | 11.1 |
| | Puncture point energy (J) | | 15 | 16.3 |

As can be seen from Tables 1 and 2, the three-dimensional shaped laminates of Examples 1 to 7 showed less occurrence of cracking and wrinkling and less shrinkage. With respect to the gloss, the three-dimensional shaped laminates of Examples 1 to 7 showed high reflectance, namely less uneven gloss. The three-dimensional shaped laminates of Examples 1 to 7 showed surface impact characteristics as high as Comparative Examples 1 and 2.

As can be seen from Table 3, the three-dimensional shaped laminate of Comparative Example 1 showed more occurrence of cracking and wrinkling and more shrinkage because Comparative Example 1 used two unidirectional fiber reinforced resin sheets at each of the top and bottom in place of one fabric of the unidirectional fiber reinforced resin sheet at each of the top and bottom. The three-dimensional shaped laminate of Comparative Example 2 showed slightly improved occurrence of cracks by setting the angle of fiber orientation of the unidirectional fiber reinforced resin sheet to ±45°, but the shrinkage was still high.

The three-dimensional shaped laminate of Example 1 was even better in terms of preventing occurrence of cracking than Examples 2 and 3, because the configuration of the unidirectional fiber reinforced resin sheet in the fabric was optimized, including the angle of the fiber direction, the width of the sheet used for plain weaving, and the aperture rate.

As processing by the stamping method gave a three-dimensional shape to the three-dimensional shaped laminate of Example 1, the gloss unevenness was even smaller than Example 7 using the heat and cool method.

### Industrial Applicability

The laminate and the three-dimensional shaped laminate of the present invention are useful, for example, for an application selected from transportation equipment applications, home appliances equipment applications, and building applications. In particular, the laminate and the three-dimensional shaped laminate are extremely useful as exterior materials (for example, flooring materials, under guards, and mat guards of vehicles) which are located on surfaces exposed to flying pebbles and other foreign objects, soundproof walls, and curing members at construction sites.

### Reference Signs List

X Carbon fiber reinforced thermoplastic resin fabric layer
Y Foam layer
Ld Linear length between end points in the cross-section of a portion containing a three-dimensional shape of a three-dimensional shaped laminate
Lw Cross-sectional perimeter in the cross-section of a portion containing a three-dimensional shape of a three-dimensional shaped laminate
S Projected area of a three-dimensional shape when viewed in a plan view in the thickness direction of a three-dimensional shaped laminate
N Depth of a three-dimensional shape in the thickness direction of a three-dimensional shaped laminate
R Bending radius in a three-dimensional shape of a three-dimensional shaped laminate

## Claims

1. A laminate, comprising:
carbon fiber reinforced thermoplastic resin fabric layers (X) each containing a fabric; and a foam layer (Y) of a thermoplastic resin in a layer structure having an order of the layer (X) / the layer (Y) / the layer (X), wherein the fabric contains unidirectional fiber reinforced resin sheets as warp and weft, the unidirectional fiber reinforced resin sheet containing continuous carbon fibers and a thermoplastic resin, and the carbon fibers are aligned in a longitudinal direction of the unidirectional fiber reinforced resin sheet,
wherein a ratio (y/x) of a thickness (y) of the layer (Y) to a thickness (x) of the layer (X) is 3 to 40, and
wherein a density of the layer (Y) is 0.2 to 0.6 g/cc.

2. The laminate according to claim 1, wherein an aperture rate of the fabric contained in the carbon fiber reinforced thermoplastic resin fabric layer (X) is 0.01 to 20%.

3. The laminate according to claim 1, wherein a thickness of the laminate is 1 to 12 mm.

4. The laminate according to claim 1, wherein a type of a matrix resin (XA) contained in the carbon fiber reinforced thermoplastic resin fabric layer (X) is identical to a type of a resin (YA) contained in the foam layer (Y).

5. The laminate according to claim 1, wherein a matrix resin (XA) contained in the carbon fiber reinforced thermoplastic resin fabric layer (X) and a resin (YA) contained in the foam layer (Y) are both propylene polymers.

6. The laminate according to claim 1, wherein a foaming ratio of the foam layer (Y) is 1.3 to 5 times.

7. The laminate according to claim 1, wherein the laminate is used as an exterior material for an application selected from transportation equipment applications, home appliances equipment applications, and building applications.

8. The laminate according to claim 1, wherein
when a longitudinal direction of the laminate is 0°, an angle of fiber orientation of one of the unidirectional fiber reinforced resin sheets of the fabric contained in the carbon fiber reinforced thermoplastic resin fabric layer (X) is ±30 to ±60°.

9. A three-dimensional shaped laminate, wherein the three-dimensional shaped laminate is obtained by giving a three-dimensional shape to the laminate according to claim 1.

10. The three-dimensional shaped laminate according to claim 9, wherein
in a cross-section of a portion containing the three-dimensional shape of the three-dimensional shaped laminate, a maximum value of a ratio (Lw/Ld) of a cross-sectional perimeter (Lw) to a linear length (Ld) between end points of the cross-section is 1.01 to 1.60.

11. The three-dimensional shaped laminate according to claim 9, wherein a projected area (S) of the three-dimensional shape viewed in a plan view in a thickness direction of the three-dimensional shaped laminate is 100 to 3,000 mm².

12. The three-dimensional shaped laminate according to claim 9, wherein a depth (N) of the three-dimensional shape in a thickness direction of the three-dimensional shaped laminate is 1 to 100 mm.

13. The three-dimensional shaped laminate according to claim 9, wherein a minimum value of a bending radius (R) in the three-dimensional shape of the three-dimensional shaped laminate is 0.5 to 10.0 mm.

14. A method for producing a three-dimensional shaped laminate, wherein the laminate according to claim 1 is subjected to heat pressing to give a three-dimensional shape to the laminate.

15. The method according to claim 14, wherein the heat pressing is processing by a stamping method.
